# EUROPÄISCHE PATENTSCHRIFT

(11) **EP 3 847 391 B1**
(45) Veröffentlichungstag und Bekanntmachung des Hinweises auf die Patenterteilung: **03.05.2023**
(21) Anmeldenummer: 19797628.5
(22) Anmeldetag: 28.10.2019
(51) Int. Cl.: F16L 25/01, F16L 27/08, B23Q 11/00, F16L 25/00, A47L 9/24, A47L 7/00

(54) **VERBINDUNGSEINRICHTUNG UND VERFAHREN ZUM HERSTELLEN EINER VERBINDUNGSEINRICHTUNG**
CONNECTION DEVICE AND METHOD FOR PRODUCING A CONNECTION DEVICE
DISPOSITIF DE LIAISON ET PROCÉDÉ DE FABRICATION D'UN DISPOSITIF DE LIAISON

(30) Priorität: 12.11.2018 DE 102018219285
(43) Veröffentlichungstag der Anmeldung: 14.07.2021
(60) Teilanmeldung: 21213130.4
(73) Patentinhaber: Festool GmbH, 73240 Wendlingen am Neckar (DE)
(72) Erfinder: MAIER, Steffen, 89264 Weißenhorn (DE)
(74) Vertreter: Patentanwälte Magenbauer & Kollegen Partnerschaft mbB
(86) Internationale Anmeldenummer: PCT/EP2019/079400
(87) Internationale Veröffentlichungsnummer: WO 2020/099108

(56) Entgegenhaltungen:
- WO-A1-2019/011591
- DE-A1-102014 119 243
- US-A- 4 625 998

## Beschreibung

Die Erfindung betrifft eine Verbindungseinrichtung zur fluidischen Verbindung eines Saugschlauchs mit einer Funktionseinheit, insbesondere einer Saugvorrichtung, einem Werkzeug und/oder einer Düse, wobei die Verbindungseinrichtung über einen ersten hohlzylindrischen Verbindungsabschnitt und einen zweiten hohlzylindrischen Verbindungsabschnitt verfügt, wobei einer der Verbindungabschnitte mit dem Saugschlauch verbindbar oder verbunden ist und der andere Verbindungsabschnitt mit der Funktionseinheit verbindbar oder verbunden ist, wobei sich einer der Verbindungsabschnitte zumindest teilweise innerhalb des anderen Verbindungsabschnitts befindet und mit seinem Außenumfang an dem Innenumfang des anderen Verbindungsabschnitts anliegt, wobei die beiden Verbindungsabschnitte zueinander drehbar gelagert sind, um einen Drehausgleich für den Saugschlauch bereitzustellen, und wobei zwischen den beiden Verbindungsabschnitten eine elektrische Verbindung zur Bereitstellung einer Antistatik-Funktion besteht.

Bei dem ersten hohlzylindrischen Verbindungsabschnitt handelt es sich beispielsweise um eine Schraubhülse und bei dem zweiten Verbindungsabschnitt handelt es sich beispielsweise um eine Muffe. Der erste Verbindungsabschnitt ist zweckmäßigerweise auf dem Saugschlauch aufgeschraubt und ist in den zweiten Verbindungsabschnitt eingesetzt. Der zweite Verbindungsabschnitt ist beispielsweise an einer Saugvorrichtung befestigt. Der erste Verbindungsabschnitt liegt mit seinem Außenumfang an dem Innenumfang des zweiten Verbindungsabschnitts an. Hierdurch wird insbesondere ein elektrischer Kontakt zwischen dem ersten Verbindungsabschnitt und dem zweiten Verbindungsabschnitt bereitgestellt, der dazu dient, die Antistatik-Funktion bereitzustellen. So wird über den Saugschlauch und die Verbindungseinrichtung eine elektrische Verbindung zu einem Erdungsleiter bereitgestellt, damit eine statische Aufladung verhindert werden kann.

Der erste Verbindungsabschnitt und der zweite Verbindungsabschnitt sind zueinander drehbar gelagert. Insbesondere kann der erste Verbindungsabschnitt relativ zum zweiten Verbindungsabschnitt frei gedreht werden. Die drehbare Lagerung des ersten Verbindungsabschnitts relativ zum zweiten Verbindungsabschnitt dient dazu, einen Drehausgleich für den Saugschlauch bereitzustellen. Der Drehausgleich verhindert, dass es im Betrieb zu Verdrehungen des Saugschlauchs kommt, die zu einem unerwünschten Verlauf des Saugschlauchs und/oder einer Versteifung des Saugschlauchs führen könnten.

Für den Drehausgleich ist es erforderlich, dass sich der erste Verbindungsabschnitt ohne zu großen Kraftaufwand relativ zum zweiten Verbindungsabschnitt drehen lässt. Insbesondere muss das für die Drehung des ersten Verbindungsabschnitts erforderliche Drehmoment kleiner sein als das Torsionsmoment des verdrehten Saugschlauchs. Das für die Drehung des ersten Verbindungsabschnitts erforderliche Drehmoment hängt von der Reibung zwischen dem ersten Verbindungsabschnitt und dem zweiten Verbindungsabschnitt ab.

Um die Reibung gering zu halten, kann der Außendurchmesser des ersten Verbindungsabschnitts entsprechend klein relativ zum Innendurchmesser des zweiten Verbindungsabschnitts ausgelegt werden. In diesem Fall besteht allerdings das Risiko, dass sich die beiden Verbindungsabschnitte nicht mehr ausreichend berühren, so dass der elektrische Kontakt zwischen den beiden Verbindungsabschnitten beeinträchtigt wird, wodurch die Antistatik-Funktion nicht mehr gegeben ist.

Die US4625998A beschreibt eine Drehschlauchkupplung mit einem Dreheinsatz, Mitteln zum Befestigen des Dreheinsatzes an einem Ende eines Schlauches, wobei der Dreheinsatz einen Hülsenabschnitt aufweist, der ein solches Schlauchende umgibt, und ein Drehschlauchendstück, das den Dreheinsatz umgibt, wobei das Drehschlauchendstück eine innere zylindrische Nut aufweist, in der ein äußerer zylindrischer Abschnitt des Hülsenabschnitts mit einem Außendurchmesser, der kleiner ist als der Innendurchmesser der inneren Nut, drehbar aufgenommen ist, wobei die innere Nut gegenüberliegende axiale innere und äußere Enden aufweist, die die gegenüberliegenden axialen inneren und äußeren Enden des Hülsenabschnitts überlappen, um den Hülsenabschnitt in der inneren Nut zu halten, wobei der Hülsenabschnitt eine Vielzahl von in Umfangsrichtung beabstandeten, sich in Längsrichtung erstreckenden Nuten in dem äußeren zylindrischen Abschnitt aufweist, die durch relativ schmale Rippen dazwischen getrennt sind, um den Reibungskontakt zwischen dem Dreheinsatz und dem Drehschlauchendstück während einer relativen Drehung zwischen ihnen zu verringern.

Die DE102014119243A1 beschreibt ein Saugschlauch-Anschlussstück für einen Saugschlauch zur Herstellung einer Strömungsverbindung insbesondere von einer Werkzeugmaschine zu einem Staubsauger, wobei das Anschlussstück einen Rohrkörper mit einer Umfangswand, die einen Strömungskanal begrenzt, und einen an dem Rohrkörper angeordneten Steckabschnitt zur Herstellung einer Steckverbindung mit einem Anschlussgegenstück aufweist, wobei das Anschlussstück und das Anschlussgegenstück aneinander ansteckbar sind, wobei der Steckabschnitt aus einem elastisch nachgiebigeren Material besteht als der Rohrkörper. Es ist vorgesehen, dass an dem Steckabschnitt mindestens eine Drehformschlusskontur zur Herstellung einer formschlüssigen Verbindung mit einer Drehformschlussgegenkontur des Anschlussgegenstücks angeordnet ist, wobei mindestens eine Drehformschlusskontur mit der Drehformschlussgegenkontur durch eine RelativDrehbewegung des Anschlussstücks und des Anschlussgegenstücks um eine Längsachse des Steckabschnitts in Eingriff oder außer Eingriff bringbar ist.

Eine Aufgabe der Erfindung besteht darin, die eingangs genannte Verbindungseinrichtung so zu modifizieren, dass sowohl der Drehausgleich wie auch die Antistatik-Funktion zuverlässig bereitgestellt werden können.

Die Aufgabe wird gelöst durch eine Verbindungseinrichtung gemäß Anspruch 1.

Der erste Verbindungsabschnitt der Verbindungseinrichtung umfasst einen Federabschnitt, der in Radialrichtung deformierbar ist. Mit diesem Federabschnitt erfolgt die Anlage des ersten Verbindungsabschnitts an dem zweiten Verbindungsabschnitt. Der Federabschnitt weist einen oder mehrere Schlitze auf.

Der Federabschnitt bildet den Außenumfang, mit dem der erste Verbindungsabschnitt an dem Innenumfang des zweiten Verbindungsabschnitts anliegt. Der Federabschnitt ist in Radialrichtung deformierbar, insbesondere elastisch deformierbar. Der Federabschnitt kann aufgrund seiner Deformierbarkeit gegenüber dem Innenumfang des zweiten Verbindungsabschnitts nachgeben. Hierdurch bleibt der erste Verbindungsabschnitt auch bei einem größeren Außendurchmesser ausreichend leicht gegenüber dem zweiten Verbindungsabschnitt drehbar. Der Außendurchmesser des ersten Verbindungsabschnitts kann (bei gleichbleibendem Innendurchmesser des zweiten Verbindungsabschnitts) dementsprechend größer als vorher ausgelegt werden, wodurch sichergestellt werden kann, dass sich die beiden Verbindungsabschnitte ständig berühren und somit auch ständig die Antistatik-Funktion gegeben ist.

Vorteilhafte Weiterbildungen werden nachstehend erläutert.

Der erste Verbindungsabschnitt ist vorzugsweise eine Schraubhülse. Der zweite Verbindungsabschnitt ist vorzugsweise eine Muffe.

Der Federabschnitt weist einen oder mehrere Schlitze auf. Vorzugsweise verlaufen der eine oder die mehreren Schlitze in Axialrichtung des ersten Verbindungsabschnitts. Der eine oder die mehreren Schlitze verlaufen insbesondere bis zu einer ersten Stirnseite des ersten Verbindungsabschnitts. Zweckmäßigerweise sind die mehreren Schlitze um den Umfang des ersten Verbindungsabschnitts verteilt angeordnet. Mittels der Schlitze kann auf einfache Art und Weise die Deformierbarkeit des Federabschnitts gewährleistet werden.

Vorzugsweise ist der Federabschnitt ein Axialabschnitt des ersten Verbindungsabschnitts. Zweckmäßigerweise definiert der Federabschnitt in einem nicht-deformierten Zustand den maximalen Außenumfang des ersten Verbindungsabschnitts. In einem Zustand, in dem der Außenumfang an dem Innenumfang anliegt, ist der Federabschnitt zweckmäßigerweise elastisch deformiert.

Ferner wird eine Anordnung bereitgestellt, umfassend einen Saugschlauch, eine Funktionseinheit und eine vorstehend beschriebene Verbindungseinrichtung, wobei die Verbindungseinrichtung eine elektrische und eine fluidische Verbindung zwischen dem Saugschlauch und der Funktionseinheit bereitstellt.

Ferner wird ein Verfahren zum Herstellen einer Verbindungseinrichtung nach einem der voranstehenden Ansprüche bereitgestellt, umfassend die Schritte: Herstellen des ersten Verbindungsabschnitts mit einer ersten Herstellungstoleranz, gemäß welcher sich der Außendurchmesser des ersten Verbindungsabschnitts in einem ersten Toleranzbereich befindet, Herstellen des zweiten Verbindungsabschnitts mit einer zweiten Herstellungstoleranz, gemäß welcher sich der Innendurchmesser des zweiten Verbindungsabschnitts in einem zweiten Toleranzbereich befindet, wobei die Differenz zwischen dem oberen Grenzwert des ersten Toleranzbereichs größer ist als der untere Grenzwert des zweiten Toleranzbereichs.

Vorzugsweise ist der obere Grenzwert des ersten Toleranzbereichs um wenigstens 0,1 mm, insbesondere wenigstens 0,15 mm oder wenigstens 0,2 mm, größer als der untere Grenzwert des zweiten Toleranzbereichs.

Vorzugsweise ist der untere Grenzwert des ersten Toleranzbereichs maximal 0,4 mm, insbesondere maximal 0,3 mm kleiner als der obere Grenzwert des zweiten Toleranzbereichs.

Ferner wird eine Schraubhülse aus elektrisch leitfähigem Kunststoff bereitgestellt, umfassend einen hohlzylindrischen Basisabschnitt, der über ein Innengewinde verfügt, mit dem die Schraubhülse auf einen Saugschlauch aufschraubbar ist, wobei sich an den Basisabschnitt in Axialrichtung ein hohlzylindrischer Federabschnitt anschließt, der eine Mehrzahl an in Axialrichtung verlaufenden Schlitzen aufweist, radial nach innen elastisch deformierbar ist und in einem nicht-deformierten Zustand den maximalen Außenumfang der Schraubhülse definiert.

Die Schraubhülse kann insbesondere als der vorstehend erwähnte erste Verbindungsabschnitt verwendet werden.

Der Federabschnitt, insbesondere der erste Verbindungsabschnitt, beispielsweise die Schraubhülse, ist exemplarisch aus Polypropylen, insbesondere aus einem thermoplastischen Kunststoff gefertigt. Zweckmäßigerweise enthält der Federabschnitt, insbesondere der erste Verbindungsabschnitt, beispielsweise die Schraubhülse, Rußpartikel, über die die elektrische Leitfähigkeit gewährleistet wird.

Mit dem Begriff "elektrisch leitfähiger Kunststoff" ist also insbesondere auch ein Kunststoff, beispielsweise Polypropylen, mit beigemengten elektrisch leitfähigen Partikeln, beispielsweise elektrisch leitenden Rußpartikeln, gemeint.

Bezugnehmend auf die Figuren werden nachstehend exemplarische Ausgestaltungen erläutert. Dabei zeigt
- Figur 1: eine Anordnung aus einer Saugvorrichtung, einem Saugschlauch, einer Funktionseinheit und zwei Verbindungseinrichtungen,
- Figur 2: eine perspektivische Ansicht einer Schraubhülse,
- Figur 3: eine weitere perspektivische Ansicht einer Schraubhülse,
- Figur 4: eine Verbindungseinrichtung,
- Figur 5: einen Schnitt durch die Verbindungseinrichtung entlang der Schnittlinie A-A der Figur 4,
- Figur 6: Toleranzbereiche bei der Herstellung einer Verbindungseinrichtung, und
- Figur 7: ein Flussdiagramm eines Verfahrens zur Herstellung einer Verbindungseinrichtung.

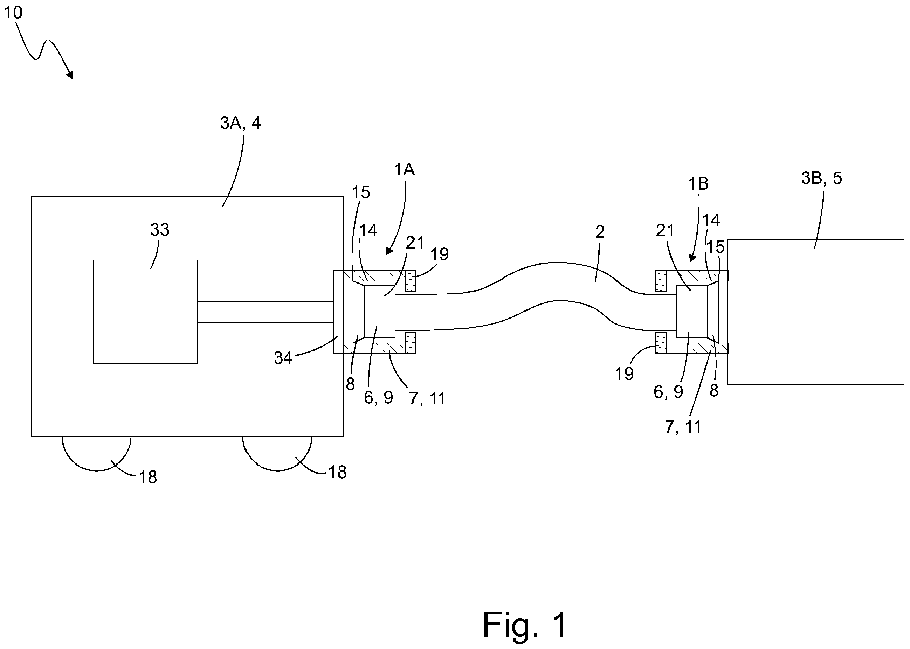

Die Figur 1 zeigt eine Anordnung 10, die eine erste Funktionseinheit 3A, eine zweite Funktionseinheit 3B, einen Saugschlauch 2, eine erste Verbindungseinrichtung 1A und eine zweite Verbindungseinrichtung 1B umfasst. Die Anordnung 10 stellt einen exemplarischen Anwendungskontext für die Verbindungseinrichtungen 1A und 1B dar. Die Verbindungseinrichtungen 1A und 1B können jeweils auch für sich genommen bereitgestellt sein.

Die erste Verbindungseinrichtung 1A dient dazu, die erste Funktionseinheit 3A elektrisch und fluidisch mit dem Saugschlauch 2 zu verbinden. Die zweite Verbindungseinrichtung 1B dient dazu, die zweite Funktionseinheit 3B elektrisch und fluidisch mit dem Saugschlauch 2 zu verbinden.

Es sei darauf hingewiesen, dass die Anordnung 10 alternativ auch nur eine der Verbindungseinrichtungen 1A, 1B aufweisen kann. Die Verbindung des Saugschlauchs 2 zu der jeweils anderen Funktionseinheit 3A oder 3B kann dann auf andere Weise erfolgen, beispielweise durch eine konventionelle Funktionseinrichtung oder durch direkte Verbindung. Beispielsweise kann die zweite Funktionseinheit 3B direkt mit dem Saugschlauch 2 verbunden sein.

Bei der ersten Funktionseinheit 3A handelt es sich um eine Saugvorrichtung 4. Exemplarisch ist die Saugvorrichtung 4 als Mobilsauger ausgeführt, der über mehrere Räder 18 verfügt, mit denen der Mobilsauger gegenüber dem Boden abgestützt ist und relativ zum Boden bewegt werden kann. Die Saugvorrichtung 4 umfasst eine Unterdruckeinheit 33, mit der an einem Anschluss 34 der Saugvorrichtung 4 ein Unterdruck bereitgestellt werden kann. Bei der Unterdruckeinheit 33 handelt es sich beispielsweise um ein Gebläse. Die Saugvorrichtung 4 umfasst ferner einen (nicht) gezeigten Erdungsleiter, der über die erste Verbindungseinrichtung 1a elektrisch mit dem Saugschlauch 2 verbunden ist.

Der Saugschlauch 2 stellt eine fluidische Verbindung zwischen der Saugvorrichtung 4, insbesondere dem Anschluss 34, und der zweiten Funktionseinheit 3B bereit. Der Saugschlauch 2 ist über die erste Verbindungseinrichtung 1A an der Saugvorrichtung 4, insbesondere dem Anschluss 34, angeschlossen. Aufgesaugte Luft und/oder Partikel werden über den Saugschlauch 2 und die erste Verbindungseinrichtung 1A in die Saugvorrichtung 4 befördert.

Der Saugschlauch 2 ist zweckmäßigerweise elektrisch leitfähig, so dass mittels des Saugschlauchs 2 eine elektrische Verbindung zwischen der Saugvorrichtung 4 und der zweiten Funktionseinheit 3B bereitgestellt werden kann. Diese elektrische Verbindung verläuft von der zweiten Funktionseinheit 3B über die (optional vorgesehene) zweite Verbindungseinrichtung 1B, den Saugschlauch 2 und die erste Verbindungseinrichtung 1A zur Saugvorrichtung 4. Die elektrische Verbindung endet insbesondere am Erdungsleiter der Saugvorrichtung. Der ohmsche Widerstand der elektrischen Verbindung beträgt zweckmäßigerweise weniger als 10 Megaohm. Mit Hilfe der elektrischen Verbindung wird eine Antistatik-Funktion bereitgestellt; d.h., statische Aufladungen am Saugschlauch 2 und/oder der zweiten Funktionseinheit 3B werden über die elektrische Verbindung zum Erdungsleiter der Saugvorrichtung 4 abgeleitet.

Der Saugschlauch 2 ist insbesondere aus flexiblem Material gefertigt, so dass der Saugschlauch 2 in seinem Verlauf flexibel anpassbar ist.

Die zweite Funktionseinheit 3B umfasst beispielsweise ein Werkzeug 5 und/oder eine Düse. Die zweite Funktionseinheit 3B ist insbesondere ein Arbeitsmittel. Das Werkzeug 5 kann beispielsweise ein Elektrowerkzeug, zweckmäßigerweise eine Säge, Schleifer oder Bohrer sein. Die zweite Funktionseinheit 3B ist über die zweite Verbindungseinrichtung 1B an den Saugschlauch 2 angeschlossen. Im Bereich der Funktionseinheit 3B entstehender und/oder vorhandener Staub kann direkt an der Funktionseinheit 3B abgesaugt werden und über den Saugschlauch 2 zu der Saugvorrichtung 4 befördert werden. Der Staub wird zweckmäßigerweise von der Funktionseinheit 3B über die zweite Verbindungseinrichtung 1B (sofern diese vorhanden ist), den Saugschlauch 2 und die erste Verbindungseinrichtung 1A zu der Saugvorrichtung 4 befördert.

Im Folgenden soll näher auf die beiden Verbindungseinrichtungen 1A und 1B eingegangen werden. Die beiden Verbindungseinrichtungen 1A und 1B können identisch oder unterschiedlich ausgeführt sein. Die nachstehend erläuterten Merkmale sind zweckmäßigerweise bei beiden Verbindungseinrichtungen 1A, 1B vorhanden. Im Folgenden wird primär auf die erste Verbindungseinrichtung 1A eingegangen. Die nachstehenden Erläuterungen gelten zweckmäßigerweise in Entsprechung auch für die zweite Verbindungseinrichtung 1B und insbesondere deren Beziehung zur zweiten Funktionseinheit 3B.

Die Verbindungseinrichtung 1A verfügt über einen ersten Verbindungsabschnitt 6 und einen zweiten Verbindungsabschnitt 7. Die beiden Verbindungsabschnitte 6, 7 sind zweckmäßigerweise aus elektrisch leitfähigem Material, insbesondere aus elektrisch leitfähigem Kunststoff, gefertigt. Der elektrische Widerstand der Verbindungsabschnitte 6, 7 beträgt zweckmäßigerweise weniger als 10 Megaohm.

Zunächst zu dem ersten Verbindungsabschnitt 6:
Der erste Verbindungsabschnitt 6 ist mit dem Saugschlauch 2 verbunden, insbesondere an diesem befestigt. Der erste Verbindungsabschnitt 6 ist beispielsweise eine Schraubhülse 9 und ist zweckmäßigerweise auf den Saugschlauch 2 geschraubt.

Der erste Verbindungsabschnitt 6 ist hohlzylindrisch ausgeführt. Der äußere Zylindermantel des Verbindungsabschnitts 6 bildet den Außenumfang 15.

Zweckmäßigerweise ist am Außenumfang 15 kein Gewinde vorhanden. Der erste Verbindungsabschnitt 6 umfasst einen freien, zylindrischen Innenraum, der als Leitungsabschnitt der fluidischen Verbindung zwischen dem Saugschlauch 2 und der Funktionseinheit 3A fungiert.

Der erste Verbindungsabschnitt 6 ist in Axialrichtung in zwei Axialabschnitte unterteilt - in einen Federabschnitt 8 und einen Basisabschnitt 21. Der Federabschnitt 8 befindet sich auf der dem Saugschlauch 2 abgewandten Seite und der Basisabschnitt 21 befindet sich auf der dem Saugschlauch 2 zugewandten Seite. Der Federabschnitt 8 ist in Radialrichtung deformierbar, insbesondere in Radialrichtung leichter deformierbar als der Basisabschnitt 21. Zweckmäßigerweise ist der Federabschnitt 8 in Radialrichtung elastisch deformierbar. Der Federabschnitt 8 nimmt exemplarisch wenigstens 1/6 und höchstens 1/4 der axialen Erstreckung des ersten Verbindungsabschnitts 6 ein.

Der Außendurchmesser des ersten Verbindungsabschnitts 6 ist zweckmäßigerweise größer als die axiale Erstreckung des ersten Verbindungsabschnitts 6.

Der Basisabschnitt 21 verfügt exemplarisch über einen kleineren Außendurchmesser als der Federabschnitt 8. Ausgehend vom Basisabschnitt 21 nimmt der Außendurchmesser des Federabschnitts 8 in Axialrichtung weg von dem Basisabschnitt 21 zu. In dem Axialbereich mit maximalem Außendurchmesser liegt der Federabschnitt 8 an dem Innenumfang 14 des zweiten Verbindungsabschnitts 7 an. Der Federabschnitt 8 bildet den Außenumfang 15 des ersten Verbindungsabschnitts 6, der an dem Innenumfang 14 des zweiten Verbindungsabschnitts 7 anliegt. Zweckmäßigerweise wird der Federabschnitt 8 durch den Innenumfang 14 in Radialrichtung nach innen deformiert, insbesondere elastisch deformiert.

Nun zu dem zweiten Verbindungsabschnitt 7:
Der zweite Verbindungsabschnitt 7 ist mit der Funktionseinheit 3A verbunden, insbesondere an dieser befestigt. Der zweite Verbindungsabschnitt 7 ist beispielsweise eine Muffe 11 oder ein Abschnitt einer Muffe.

Der zweite Verbindungsabschnitt 7 ist hohlzylindrisch ausgeführt. Der innere Zylindermantel des zweiten Verbindungsabschnitts 7 bildet den Innenumfang 14. Der zweite Verbindungsabschnitt 7 umfasst einen zylindrischen Innenraum.

Am Innenumfang 14 des zweiten Verbindungsabschnitts 7 ist zweckmäßigerweise kein Gewinde vorhanden.

Im Folgenden soll auf das Zusammenspiel der beiden Verbindungsabschnitte 6, 7 eingegangen werden:
Der erste Verbindungsabschnitt 6 befindet sich innerhalb des zweiten Verbindungsabschnitts 7. Exemplarisch ist der erste Verbindungsabschnitt 6 vollständig in den hohlzylindrischen zweiten Verbindungsabschnitt 7 eingesetzt, insbesondere in dessen zylindrischen Innenraum. Der erste Verbindungsabschnitt 6 liegt mit seinem Außenumfang 15 an dem Innenumfang 14 des zweiten Verbindungsabschnitts 7 an.

Insbesondere liegt der erste Verbindungsabschnitt 6 mit dem Federabschnitt 8 an dem Innenumfang 14 an.

Durch die Anlage des Federabschnitts 8 an dem Innenumfang 14 wird ein elektrischer Kontakt zwischen den beiden Verbindungsabschnitten 6, 7 bereitgestellt. Zwischen den beiden Verbindungsabschnitten 6, 7 besteht eine elektrische Verbindung von insbesondere weniger als 10 Megaohm, mit der die eingangs erwähnte Antistatik-Funktion bereitgestellt wird.

Die beiden Verbindungsabschnitte 6, 7 sind zueinander drehbar gelagert, um einen Drehausgleich für den Saugschlauch 2 bereitzustellen. Der erste Verbindungsabschnitt 6 ist um seine Längsachse herum relativ zum zweiten Verbindungsabschnitt 7 drehbar, insbesondere frei drehbar.

An der der ersten Funktionseinheit 3A abgewandten Stirnseite des zweiten Verbindungsabschnitts 7 ist ein Befestigungsring 19 angeordnet, der verhindert, dass der erste Verbindungsabschnitt 6 aus dem zweiten Verbindungsabschnitt 7 heraus gezogen werden kann. Der Innendurchmesser des Befestigungsrings 19 ist kleiner als der Außendurchmesser des ersten Verbindungsabschnitts 6. Der Befestigungsring 19 verfügt über eine Ringöffnung, durch die der Saugschlauch 2 in den zweiten Verbindungsabschnitt 7 verläuft.

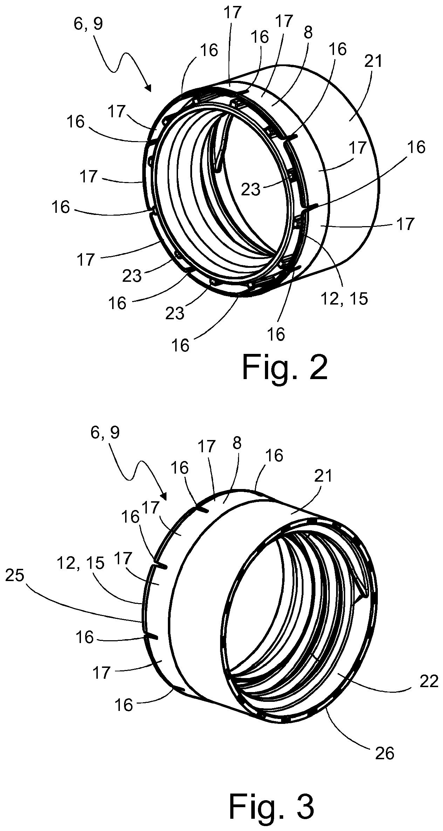

Nachfolgend wird unter Bezugnahme auf die Figuren 2 und 3 auf eine mögliche Ausgestaltung des ersten Verbindungsabschnitts 6 eingegangen. Der erste Verbindungsabschnitt 6 ist hier exemplarisch als Schraubhülse 9 ausgebildet. Die Schraubhülse 9 kann auch für sich genommen bereitgestellt sein.

Der erste Verbindungsabschnitt 6 ist zweckmäßigerweise wie vorstehend bereits erläutert ausgebildet. Der erste Verbindungsabschnitt 6 umfasst den Federabschnitt 8, der auch hier ein Axialabschnitt, insbesondere ein axialer Endabschnitt, des ersten Verbindungsabschnitts 6 ist. Der Federabschnitt 8 erstreckt sich bis zur ersten Stirnseite 25 des ersten Verbindungsabschnitts 6. Der Federabschnitt 8 ist hohlzylindrisch, insbesondere ringförmig, ausgeführt. Am Federabschnitt 8 ist zweckmäßigerweise kein Innengewinde und/oder kein Außengewinde vorgesehen.

Exemplarisch verfügt der Federabschnitt 8 über einen Ringwulst 12, über den die Anlage des Federabschnitts 8 an dem Innenumfang 14 erfolgt. Der Ringwulst 12 befindet sich im Bereich der ersten Stirnseite 25. Der Ringwulst 12 bildet den Außenumfang 15.

Der Federabschnitt 8 weist mehrere Schlitze 16 auf. Die Schlitze 16 verlaufen in Axialrichtung des ersten Verbindungsabschnitts 6, insbesondere parallel zur Axialrichtung. Die Schlitze 16 verlaufen insbesondere bis zur ersten Stirnseite 25 des ersten Verbindungsabschnitts 6. Die Schlitze 16 münden insbesondere an der ersten Stirnseite 25 aus. Die Schlitze 12 verlaufen durch den Ringwulst 12.

Zweckmäßigerweise sind die mehreren Schlitze 16 um den Umfang des ersten Verbindungsabschnitts 6 verteilt angeordnet. Die Schlitze 16 sind insbesondere unter gleichen Winkelabständen zueinander angeordnet. Vorzugsweise sind wenigstens 6, 7, 8, 9 oder 10 Schlitze 16 vorhanden. Zweckmäßigerweise sind genau 6, 7, 8, 9 oder 10 Schlitze 16 vorhanden.

Die Schlitze 16 sind zweckmäßigerweise nur in dem Federabschnitt 8 vorhanden und enden hier. Die Schlitze 16 erstrecken sich insbesondere nicht in den Basisabschnitt 21. Die Schlitze 16 erstrecke sich zweckmäßigerweise über wenigstens 1/7 oder wenigstens 1/6 der axialen Erstreckung des ersten Verbindungsabschnitts 6 und vorzugsweise über höchstens 1/5 der axialen Erstreckung des ersten Verbindungsabschnitts 6.

Exemplarisch sind die Schlitze 16 jeweils zwischen 4 mm bis 6 mm, insbesondere zwischen 4,5 mm bis 5,5 mm, vorzugsweise 4, 9 mm lang. Die Schlitze sind vorzugsweise zwischen 0,3 mm und 0,7 mm, vorzugsweise 0,5 mm breit.

Zwischen zwei benachbarten Schlitzen 16 befindet sich jeweils ein Umfangsabschnitt 17. Die äußere Erstreckung der Umfangsabschnitte 17 in Umfangsrichtung - also der Kreisbogen zwischen zwei benachbarten Schlitzen 16 - beträgt zweckmäßigerweise 15 mm bis 20 mm.

Der Basisabschnitt 21 verfügt über ein Innengewinde 22, mit dem der erste Verbindungsabschnitt 6 auf dem Saugschlauch 2 aufgeschraubt oder aufschraubbar ist. Das Innengewinde 22 erstreckt sich zweckmäßigerweise bis zur zweiten Stirnseite 26 des ersten Verbindungsabschnitts 6.

Der Basisabschnitt 21 und der Federabschnitt 8 bilden zusammen einen äußeren zylindrischen Abschnitt. Innerhalb dieses äußeren zylindrischen Abschnitts liegt ein innere zylindrischer Abschnitt 24. Der innere zylindrische Abschnitt 24 erstreckt sich in Axialrichtung von der ersten Stirnseite 25 bis zum mittleren axialen Bereich des Verbindungsabschnitts 6. Der innere zylindrische Abschnitt 24 überlappt sich in Axialrichtung mit dem Innengewinde 22. Der innere zylindrische Abschnitt 24 ist über einen ringförmigen Verbindungsabschnitt mit dem Basisabschnitt 21 verbunden. Der innere zylindrische Abschnitt 24 verfügt über eine Mehrzahl an Rippen 23, die ausgehend von der ersten Stirnseite 25 in Axialrichtung verlaufen und außen an dem inneren zylindrischen Abschnitt 24 angeordnet sind. Die Rippen 23 sind um den Umfang des inneren zylindrischen Abschnitts 24 verteilt angeordnet. Die Rippen 23 sind zweckmäßigerweise radial von dem Federabschnitt 8 beabstandet. Die Rippen 23 nehmen vorzugsweise den gleichen axialen Bereich ein, wie der Federabschnitt 8.

Die Länge - also die axiale Erstreckung - des ersten Verbindungsabschnitts 9 beträgt zweckmäßigerweise zwischen 20 mm bis 40 mm, insbesondere zwischen 27 mm und 33 mm. Der Außendurchmesser des ersten Verbindungsabschnitts 9 beträgt zweckmäßigerweise zwischen 35 mm und 55 mm.

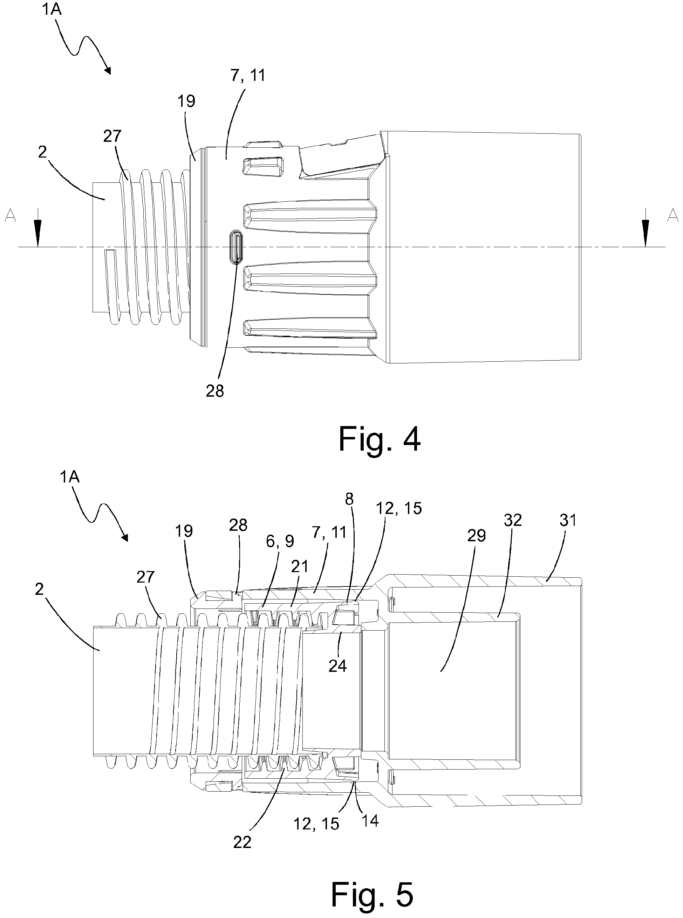

Nachfolgend wird unter Bezugnahme auf die Figuren 4 und 5 auf eine mögliche Ausgestaltung der ersten Verbindungseinrichtung 1A eingegangen. Die erste Verbindungseinrichtung 1A ist zweckmäßigerweise wie vorstehend erläutert ausgebildet. Die zweite Verbindungseinrichtung 1B ist zweckmäßigerweise in Entsprechung dazu ausgebildet.

An der dem Saugschlauch 2 zugewandten Stirnseite der Verbindungseinrichtung 1A befindet sich der Befestigungsring 19. Der Befestigungsring 19 liegt an der Stirnseite und an dem Innenumfang des zweiten Verbindungsabschnitts 7 an. Der Befestigungsring 19 ist lösbar an dem zweiten Verbindungsabschnitt 7 befestigt, exemplarisch über eine Rastverbindung 28.

Der zweite Verbindungsabschnitt 7 umfasst exemplarisch einen äußeren zylindrischen Abschnitt 31 und einen inneren zylindrischen Abschnitt 32. Der innere zylindrische Abschnitt 32 schließt sich in Axialrichtung an den ersten Verbindungsabschnitt 6 an. Der erste Verbindungsabschnitt 6 ist in Axialrichtung zwischen dem Befestigungsring 19 und dem inneren zylindrischen Abschnitt 32 angeordnet, so dass der erste Verbindungsabschnitt 6 in seiner Bewegung relativ zum zweiten Verbindungsabschnitt 7 in Axialrichtung beidseitig begrenzt ist.

Der erste Verbindungsabschnitt 6 und der zweite Verbindungsabschnitt 7 stellen zusammen eine fluidische Leitung 29 bereit, über die Luft und/oder Partikel zwischen dem Saugschlauch 2 und der Funktionseinheit 3A befördert werden können.

Wie in der Figur 5 zu sehen, liegt der erste Verbindungsabschnitt 7 mit dem Außenumfang 15 des Federabschnitts 8, insbesondere dem Außenumfang des Ringwulsts 12, an dem Innenumfang 14 an.

In den Figuren 4 und 5 ist der Verbindungsabschnitt 6 auf dem Saugschlauch 2 aufgeschraubt. Der Saugschlauch 2 verfügt über ein Außengewinde 27, auf das der erste Verbindungsabschnitt 6 aufgeschraubt ist. Zweckmäßigerweise ist an beiden Enden des Saugschlauchs 2 ein entsprechendes Außengewinde vorhanden. Zweckmäßigerweise ist an beiden Enden des Saugschlauchs ein Verbindungsabschnitt 6 aufgeschraubt.

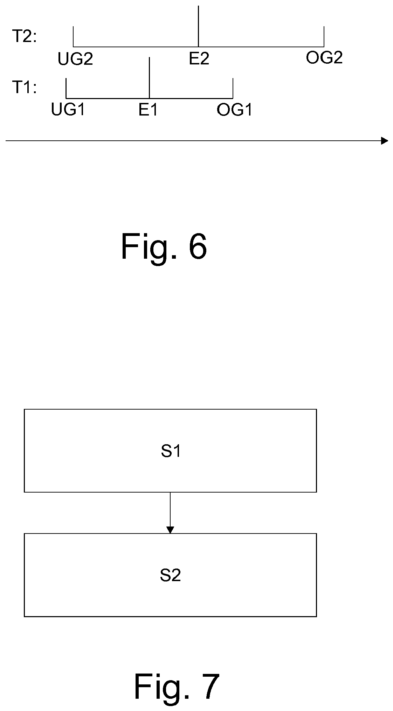

Im Folgenden soll unter Bezugnahme auf die Figuren 6 und 7 näher auf die Herstellung der Verbindungseinrichtung 1A eingegangen werden.

Die Verbindungseinrichtung 1A wird zweckmäßigerweise per Spritzguss hergestellt. Vorzugsweise werden der erste Verbindungsabschnitt 6 und der zweite Verbindungsabschnitt 7 jeweils als einzelne Bauteile, insbesondere als einzelne Spritzguss-Bauteile, hergestellt.

Die Verbindungsabschnitte 6 und 7 unterliegen bei der Herstellung jeweiligen Herstellungstoleranzen, die insbesondere den Außendurchmesser des ersten Verbindungsabschnitts 6 und den Innendurchmesser des zweiten Verbindungsabschnitts 7 betreffen. Aufgrund der Herstellungstoleranzen ergibt sich für den Außendurchmesser des ersten Verbindungsabschnitts 6 ein erster Toleranzbereich T1 und für den Innendurchmesser des zweiten Verbindungsabschnitts 7 ein zweiter Toleranzbereich T2. Wird eine Mehrzahl von ersten Verbindungsabschnitten 6 und zweiten Verbindungsabschnitten 7 hergestellt, so werden die Außendurchmesser und Innendurchmesser der hergestellten Verbindungsabschnitte 6, 7 aufgrund der Herstellungstoleranzen des Herstellungsverfahrens verteilt innerhalb der Toleranzbereiche T1, T2 liegen.

Die beiden Toleranzbereiche T1, T2 können jeweils über einen Erwartungswert E1, E2, einen oberen Grenzwert OG1, OG2 und einen unteren Grenzwert UG1, UG2 definiert werden.

Bei der Herstellung einer Mehrzahl von Verbindungsabschnitten 6, 7 wird es aufgrund dieser Herstellungstoleranzen auch Verbindungsabschnitte 6, 7 geben, deren Außendurchmesser oder Innendurchmesser auf einem der Grenzwerte OG1, OG2, UG1, UG2 liegen.

Bei der Herstellung einer Verbindungseinrichtung 1A wird jeweils ein erster Verbindungsabschnitt 6 mit einem zweiten Verbindungsabschnitt 7 kombiniert. Dabei ist sicherzugehen, dass bei jeder hergestellten Verbindungseinrichtung 1A sowohl der vorstehend erwähnte Drehausgleich als auch die vorstehend erwähnte Antistatik-Funktion gegeben ist. Dies kann insbesondere durch die nachfolgend erläuterte Wahl der Toleranzbereiche T1, T2 gewährleistet werden.

Insbesondere sind die Toleranzbereiche T1, T2 derart gewählt, dass der obere Grenzwert OG1 des ersten Toleranzbereichs T1 größer ist als der untere Grenzwert UG2 des zweiten Toleranzbereichs T2.

Dies bedeutet, dass explizit zugelassen wird, dass in dem für den Drehausgleich ungünstigsten Fall - nämlich der Kombination der Grenzwerte OG1 und UG2 - der Außendurchmesser des ersten Verbindungsabschnitts 6 größer sein kann als der Innendurchmesser des zweiten Verbindungsabschnitts 7. Es kommt hier gewissermaßen zu einer "Überschneidung" von Außendurchmesser und Innendurchmesser. Aufgrund des elastisch deformierbaren Federabschnitts 8 kann auch in diesem Fall gewährleistet werden, dass eine Drehbewegung des ersten Verbindungsabschnitts 6 relativ zum zweiten Verbindungsabschnitt 7 leichtgängig genug ist, um den Drehausgleich bereitzustellen.

Exemplarisch ist der obere Grenzwert OG1 des ersten Toleranzbereichs T1 um wenigstens 0,1 mm, insbesondere wenigstens 0,15 mm größer als der untere Grenzwert UG des zweiten Toleranzbereichs T2.

Durch die Wahl eines größeren oberen Grenzwerts OG1 für den Außendurchmesser kann der erste Toleranzbereich T1 (gegenüber dem Stand der Technik) weiter nach "rechts" - also hin zu größeren Außendurchmessern - verschoben werden. Dadurch kann der maximale Abstand zwischen dem unteren Grenzwert UG1 des Außendurchmessers und dem oberen Grenzwert OG2 des Innendurchmessers verringert werden, so dass auch in dem für die Antistatik-Funktion ungünstigen Fall - nämlich der Kombination der Grenzwerte UG1 und OG2 - der elektrische Kontakt zwischen den beiden Verbindungsabschnitten 6, 7 gegeben ist und die Antistatik-Funktion bereitgestellt wird.

Exemplarisch ist der untere Grenzwert UG1 des ersten Toleranzbereichs T1 um maximal 0,4 mm, insbesondere maximal 0,3 mm kleiner als der obere Grenzwert UG2 des zweiten Toleranzbereichs T2.

Der erste Toleranzbereich T1 ist zweckmäßigerweise kleiner oder gleich groß wie der zweite Toleranzbereich T2. Der erste Toleranzbereich T1 - also die Differenz zwischen OG1 und UG1
- beträgt zweckmäßigerweise 0,2 mm. Der zweite Toleranzbereich T2 - also die Differenz zwischen OG2 und UG2
- beträgt zweckmäßigerweise 0,2 mm oder 0,3 mm.

In der folgenden Tabelle sind exemplarische Werte für die beiden Toleranzbereiche T1, T2 aufgeführt, und zwar für drei verschiedene Typen des ersten Verbindungsabschnitts 6 und des zweiten Verbindungsabschnitts 7. Zur Herstellung einer Verbindungseinrichtung werden jeweils ein erster Verbindungsabschnitt 6 und ein zweiter Verbindungsabschnitt 7 des gleichen Typs kombiniert.

| | Außendurchmesser erster Verbindungsabschnitt 6 (mm) | Innendurchmesser zweiter Verbindungsabschnitt 7 (mm) |
|---|---|---|
| Typ 1 | 40,05 ± 0,1 | 40,09 ± 0,1 |
| Typ 2 | 46,05 ± 0,1 | 46,13 ± 0,15 |
| Typ 3 | 51,65 ± 0,1 | 51,65 ± 0,15 |

Die Figur 7 zeigt ein Flussdiagramm eines Verfahrens zum Herstellen einer vorstehenden erläuterten Verbindungseinrichtung 1A. Das Verfahren umfasst die Schritte: Herstellen S1 des ersten Verbindungsabschnitts 6 mit einer ersten Herstellungstoleranz, gemäß welcher sich der Außendurchmesser des ersten Verbindungsabschnitts 6 in einem ersten Toleranzbereich T1 befindet, Herstellen S2 des zweiten Verbindungsabschnitts 7 mit einer zweiten Herstellungstoleranz, gemäß welcher sich der Innendurchmesser des zweiten Verbindungsabschnitts 7 in einem zweiten Toleranzbereich T2 befindet, wobei der obere Grenzwert OG1 des ersten Toleranzbereichs T1 größer ist als der untere Grenzwert UG2 des zweiten Toleranzbereichs T2.

Das Verfahren umfasst zweckmäßigerweise den weiteren Schritt des Einsetzens des ersten Verbindungsabschnitts 6 in den zweiten Verbindungsabschnitt 7.

Mittels des Herstellungsverfahrens wird zweckmäßigerweise eine Mehrzahl von ersten Verbindungsabschnitten 6 und zweiten Verbindungsabschnitten 7 hergestellt. Darin enthalten ist mindestens ein erster Verbindungsabschnitt 6 mit einem oberen Grenzwert OG1, ein erster Verbindungsabschnitt 6, mit einem unteren Grenzwert UG1, ein zweiter Verbindungsabschnitt 7 mit einem oberen Grenzwert OG2 und ein zweiter Verbindungsabschnitt 7 mit einem unteren Grenzwert UG2. Die Grenzwerte OG1, OG2, UG1, UG2 weisen zweckmäßigerweise eine oder mehrere der vorstehend erläuterten Beziehungen auf.

Die Mehrzahl an Verbindungsabschnitten 6, 7 wird zur Herstellung von Verbindungseinrichtungen verwendet.

Nachstehend sollen weitere exemplarische Details erläutert werden.

Der Saugschlauch 2 verfügt zweckmäßigerweise über einen Textilüberzug. Der Textilüberzug ist vorzugsweise elektrisch leitfähig.

Die Schraubhülse 9 ist ohne Begrenzung rotatorisch in der Muffe 11 gelagert. Die Schraubhülse 9 und die Muffe 11 bestehen aus leitfähigem Kunststoff. Die Antistatik-Leitfähigkeit von der Schraubhülse 9 zu der Muffe 11 wird mittels des Ringwulstes 12 bereitgestellt, der im Innendurchmesser der Muffe 11 schleift.

Die Schraubhülse 9 und die Muffe 11 werden zweckmäßigerweise per Spritzguss hergestellt. Das Herstellungsverfahren für die Schraubhülse 9 und die Muffe 11 hat eine Maximaltoleranz für den Innendurchmesser der Muffe 11 und dem Außendurchmesser der Schraubhülse 9 von jeweils +/- 0,1 mm.

Bei konventionellen Verbindungseinrichtungen kann es bei den beiden ungünstigsten Toleranzpaarungen zu einem Luftspalt zwischen der Muffe 11 und der Schraubhülse 9 kommen (wodurch die elektrische Leitfähigkeit beeinträchtigt wird) oder zu einer Verpressung der beiden Teile, was zu einem Verlust des Drehausgleichs führen kann.

Die vorliegende Schraubhülse 9 ist im Bereich der Ringwulst 12 geschlitzt, so dass sich Federsegmente ausbilden, welche den Effekt der Verklemmung verringern.

Bei der Herstellung werden die Toleranzen von Muffe 11 und Schraubhülse 9 so ausgelegt, dass auch im ungünstigsten Fall der Paarung eine Berührung von Muffe 11 und Schraubhülse 9 gegeben ist und somit die Antistatik-Leitfähigkeit sichergestellt ist. Durch den Federeffekt des Federabschnitts wird in dem Extremfall, bei dem der Außendurchmesser der Schraubhülse 9 maximal ist und der Innendurchmesser der Muffe 11 minimal ist, eine Verklemmung der Schraubhülse 9 verhindert.

Die Abmessungen der Schraubhülse und der Muffe sind so ausgelegt, dass:
- sich bei dem größten Außendurchmesser der Schraubhülse und dem kleinsten Innendurchmesser der Muffe eine maximale Überschneidung von 0,2 mm ergibt;
- sich aufgrund der Toleranzen bei dem kleinsten Außendurchmesser der Schraubhülse und größtem Innendurchmesser der Muffe 0,3 mm Spiel zwischen Schraubhülse und Muffe ergibt.

## Patentansprüche

1. Verbindungseinrichtung (1A, 1B) zur fluidischen Verbindung eines Saugschlauchs (2) mit einer Funktionseinheit (3A, 3B), insbesondere einer Saugvorrichtung (4), einem Werkzeug (5) und/oder einer Düse, wobei die Verbindungseinrichtung (1A, 1B) über einen ersten insbesondere hohlzylindrischen Verbindungsabschnitt (6) und einen zweiten insbesondere hohlzylindrischen Verbindungsabschnitt (7) verfügt, wobei einer der Verbindungabschnitte (6) mit dem Saugschlauch (2) verbindbar oder verbunden ist und der andere Verbindungsabschnitt (7) mit der Funktionseinheit (3A, 3B) verbindbar oder verbunden ist, wobei sich einer der Verbindungsabschnitte (6) zumindest teilweise innerhalb des anderen Verbindungsabschnitts (7) befindet und mit seinem Außenumfang (15) an dem Innenumfang (14) des anderen Verbindungsabschnitts (7) anliegt, wobei die beiden Verbindungsabschnitte (6, 7) zueinander drehbar gelagert sind, um einen Drehausgleich für den Saugschlauch (2) bereitzustellen, und wobei zwischen den beiden Verbindungsabschnitten (6, 7) eine elektrische Verbindung zur Bereitstellung einer Antistatik-Funktion besteht, wobei der erste Verbindungsabschnitt (6) einen in Radialrichtung deformierbaren Federabschnitt (8) umfasst, mit dem die Anlage an dem zweiten Verbindungsabschnitt (7) erfolgt und wobei der Federabschnitt (8) einen oder mehrere Schlitze (16) aufweist.

2. Verbindungseinrichtung (1A, 1B) nach Anspruch 1, **dadurch gekennzeichnet, dass** der eine oder die mehreren Schlitze (16) in Axialrichtung des ersten Verbindungsabschnitts (6) verlaufen.

3. Verbindungseinrichtung (1A, 1B) nach Anspruch 1 oder 2, **dadurch gekennzeichnet, dass** der eine oder die mehreren Schlitze (16) bis zu einer ersten Stirnseite (25) des ersten Verbindungsabschnitts (6) verlaufen.

4. Verbindungseinrichtung (1A, 1B) nach einem der Ansprüche 1 bis 3, **dadurch gekennzeichnet, dass** die mehreren Schlitze (16) um den Umfang des ersten Verbindungsabschnitts (6, 7) verteilt angeordnet sind.

5. Verbindungseinrichtung (1A, 1B) nach einem der voranstehenden Ansprüche, **dadurch gekennzeichnet, dass** der Federabschnitt (8) ein Axialabschnitt des ersten Verbindungsabschnitts (6) ist.

6. Verbindungseinrichtung (1) nach einem der voranstehenden Ansprüche, **dadurch gekennzeichnet, dass** der Federabschnitt (8) in einem nicht-deformierten Zustand den maximalen Außenumfang des ersten Verbindungsabschnitts (6) definiert.

7. Verbindungseinrichtung (1) nach einem der voranstehenden Ansprüche, **dadurch gekennzeichnet, dass** der erste Verbindungsabschnitt (6) eine Schraubhülse (9) ist.

8. Verbindungseinrichtung (1) nach einem der voranstehenden Ansprüche, **dadurch gekennzeichnet, dass** der zweite Verbindungsabschnitt (7) eine Muffe (11) oder ein Abschnitt einer Muffe ist.

9. Verbindungseinrichtung (1) nach Anspruch 1, wobei der erste Verbindungsabschnitt (7) eine Schraubhülse (9) aus elektrisch leitfähigem Kunststoff ist, umfassend einen hohlzylindrischen Basisabschnitt (21), der über ein Gewinde, insbesondere Innengewinde (22), verfügt, mit dem die Schraubhülse (9) auf einen Saugschlauch (2) aufschraubbar ist, wobei die Schraubhülse den sich an den Basisabschnitt (21) in Axialrichtung anschließenden hohlzylindrischen Federabschnitt (8), der die mehreren in Axialrichtung verlaufenden Schlitzen (16) aufweist, in Radialrichtung nach innen elastisch deformierbar ist und in einem nicht-deformierten Zustand den maximalen Außenumfang der Schraubhülse (9) definiert.

10. Anordnung (10), umfassend einen Saugschlauch (2), eine Funktionseinheit (3A, 3B) und eine Verbindungseinrichtung (1A, 1B) nach einem der voranstehenden Ansprüche, wobei die Verbindungseinrichtung (1A, 1B) eine elektrische und eine fluidische Verbindung zwischen dem Saugschlauch (2) und der Funktionseinheit (3A, 3B) bereitstellt.

11. Verfahren zum Herstellen einer Verbindungseinrichtung (1) nach einem der Ansprüche 1 bis 9, umfassend die Schritte:
Herstellen (S1) des ersten Verbindungsabschnitts (6) mit einer ersten Herstellungstoleranz, gemäß welcher sich der Außendurchmesser des ersten Verbindungsabschnitts (6) in einem ersten Toleranzbereich (T1) befindet,
Herstellen (S2) des zweiten Verbindungsabschnitts (7) mit einer zweiten Herstellungstoleranz, gemäß welcher sich der Innendurchmesser des zweiten Verbindungsabschnitts (7) in einem zweiten Toleranzbereich (T2) befindet, wobei der obere Grenzwert (OG1) des ersten Toleranzbereichs (T1) größer ist als der untere Grenzwert (UG2) des zweiten Toleranzbereichs (T2).

12. Verfahren nach Anspruch 11, wobei der obere Grenzwert (OG1) des ersten Toleranzbereichs (T1) um wenigstens 0,1 mm, insbesondere wenigstens 0,15 mm oder wenigstens 0,2 mm größer ist als der untere Grenzwert (UG) des zweiten Toleranzbereichs (T2).

13. Verfahren nach Anspruch 11 oder 12, wobei der untere Grenzwert (UG1) des ersten Toleranzbereichs (T1) um maximal 0,4 mm, insbesondere maximal 0,3 mm kleiner ist als der obere Grenzwert (OG2) des zweiten Toleranzbereichs (T2).

## Claims

1. Connection device (1A, 1B) for the fluidic connection of a suction tube (2) to a function unit (3A, 3B), in particular to a suction apparatus (4), to a tool (5) and/or to a nozzle, wherein the connection device (1A, 1B) comprises a first in particular hollow-cylindrical connection section (6) and a second in particular hollow-cylindrical connection section (7), wherein one of the connection sections (6) is connectable or connected to the suction tube (2) and the other connection section (7) is connectable or connected to the function unit (3A, 3B), wherein one of the connection sections (6) is located at least partly within the other connection section (7) and with its outer periphery (15) bears on the inner periphery (14) of the other connection section (7), wherein the two connection sections (6, 7) are rotatably mounted to one another, in order to provide a rotation compensation for the suction tube (2), and wherein an electrical connection for providing an antistatic function exists between the two connection sections (6, 7), wherein the first connection section (6) comprises a spring section (8) which is deformable in the radial direction and with which the bearing contact on the second connection section (7) is provided and wherein the spring section (8) comprises one or plural slots (16).

2. Connection device (1A, 1B) according to claim 1, **characterised in that** the one or plural slots (16) run in the axial direction of the first connection section (6).

3. Connection device (1A, 1B) according to claim 1 or 2, **characterised in that** the one or plural slots (16) run up to a first face side (25) of the first connection section (6).

4. Connection device (1A, 1B) according to one of the claims 1 to 3, **characterised in that** the plural slots (16) are arranged distributed around the periphery of the first connection section (6, 7) .

5. Connection device (1A, 1B) according to one of the preceding claims, **characterised in that** the spring section (8) is an axial section of the first connection section (6).

6. Connection device (1) according to one of the preceding claims, **characterised in that** the spring section (8) in a non-deformed state defines the maximal outer circumference of the first connection section (6).

7. Connection device (1) according to one of the preceding claims, **characterised in that** the first connection section (6) is a screw sleeve (9).

8. Connection device (1) according to one of the preceding claims, **characterised in that** the second connection section (7) is a bushing (11) or a section of a bushing.

9. Connection device (1) according to claim 1, wherein the first connection section (7) is a screw sleeve (9) of an electrically conductive plastic, comprising a hollow-cylindrical base section (21) which comprises a thread, in particular inner thread (22), with which the screw sleeve (9) can be screwed onto a suction tube (2), wherein the screw sleeve comprises the hollow-cylindrical spring section (8) which follows the base section (21) in the axial direction, said spring section comprising the plurality of slots (16) which run in the axial direction, being elastically deformable inwards in the radial direction and in a non-deformed state defining the maximal outer periphery of the screw sleeve (9).

10. Arrangement (10), comprising a suction tube (2), a function unit (3A, 3B) and a connection device (1A, 1B) according to one of the preceding claims, wherein the connection device (1A, 1B) provides an electrical and fluidic connection between the suction tube (2) and the function unit (3A, 3B).

11. Method for manufacturing a connection device (1) according to one of the claims, 1 to 9, comprising the steps:
manufacturing (S1) the first connection section (6) with a first manufacturing tolerance, according to which the outer diameter of the first connection section (6) is situated in a first tolerance range (T1),
manufacturing (S2) the second connection section (7) with a second manufacturing tolerance, according to which the inner diameter of the second connection section (7) is situated in a second tolerance range (T2), wherein
the upper limit value (OG1) of the first tolerance range (T1) is larger than the lower limit value (UG2) of the second tolerance range (T2).

12. Method according to claim 11, wherein the upper limit value (OG1) of the first tolerance range (T1) is at least 0.1 mm, in particular at least 0.15 mm or at least 0.2 mm larger than the lower limit value (UG) of the second tolerance range (T2).

13. Method according to claim 11 or 12, wherein the lower limit value (UG1) of the first tolerance range (T1) is maximally 0.4 mm, in particular maximally 0.3 mm smaller than the upper limit value (OG2) of the second tolerance range (T2).

## Revendications

1. Dispositif de liaison (1A, 1B) pour la liaison fluidique d'un tuyau d'aspiration (2) avec une unité fonctionnelle (3A, 3B), en particulier un dispositif d'aspiration (4), un outil (5) et/ou une buse, dans lequel le dispositif de liaison (1A, 1B) dispose d'une première section de liaison (6) en particulier cylindrique et creuse et d'une seconde section de liaison (7) en particulier cylindrique et creuse, dans lequel une des sections de liaison (6) est ou peut être reliée au tuyau d'aspiration (2) et l'autre section de liaison (7) est ou peut être reliée à l'unité fonctionnelle (3A, 3B), dans lequel une des sections de liaison (6) se trouve au moins partiellement à l'intérieur de l'autre section de liaison (7) et repose avec sa périphérie extérieure (15) contre la périphérie intérieure (14) de l'autre section de liaison (7), dans lequel les deux sections de liaison (6, 7) sont logées de manière rotative l'une par rapport à l'autre afin de fournir une compensation de rotation pour le tuyau d'aspiration (2), et dans lequel entre les deux sections de liaison (6, 7), une liaison électrique existe pour la fourniture d'une fonction antistatique, dans lequel la première section de liaison (6) comporte une section de ressort (8) déformable dans le sens radial, avec laquelle l'appui contre la seconde section de liaison (7) est effectué et dans lequel la section de ressort (8) présente une ou plusieurs fentes (16).

2. Dispositif de liaison (1A, 1B) selon la revendication 1, **caractérisé en ce que** l'une ou les plusieurs fentes (16) s'étendent dans le sens axial de la première section de liaison (6).

3. Dispositif de liaison (1A, 1B) selon la revendication 1 ou 2, **caractérisé en ce que** l'une ou les plusieurs fentes (16) s'étendent jusqu'à un premier côté avant (25) de la première section de liaison (6).

4. Dispositif de liaison (1A, 1B) selon l'une quelconque des revendications 1 à 3, **caractérisé en ce que** les plusieurs fentes (16) sont agencées réparties autour de la périphérie de la première section de liaison (6, 7).

5. Dispositif de liaison (1A, 1B) selon l'une quelconque des revendications précédentes, **caractérisé en ce que** la section de ressort (8) est une section axiale de la première section de liaison (6).

6. Dispositif de liaison (1) selon l'une quelconque des revendications précédentes, **caractérisé en ce que** la section de ressort (8) définit dans un état non déformé la périphérie extérieure maximale de la première section de liaison (6).

7. Dispositif de liaison (1) selon l'une quelconque des revendications précédentes, **caractérisé en ce que** la première section de liaison (6) est une douille filetée (9).

8. Dispositif de liaison (1) selon l'une quelconque des revendications précédentes, **caractérisé en ce que** la seconde section de liaison (7) est un manchon (11) ou une section d'un manchon.

9. Dispositif de liaison (1) selon la revendication 1, dans lequel la première section de liaison (7) est une douille filetée (9) en une matière plastique électroconductrice, comprenant une section de base (21) cylindrique et creuse qui dispose d'un filet, en particulier d'un filet intérieur (22), avec lequel la douille filetée (9) peut être vissée sur un tuyau d'aspiration (2), dans lequel la douille filetée la section de ressort (8) cylindrique et creuse contigüe à la section de base (21) dans le sens axial qui présente les plusieurs fentes (16) s'étendant dans le sens axial, est déformable élastiquement dans le sens radial vers l'intérieur et définit dans un état non déformé la périphérie extérieure maximale de la douille filetée (9).

10. Agencement (10) comprenant un tuyau d'aspiration (2), une unité fonctionnelle (3A, 3B) et un dispositif de liaison (1A, 1B) selon l'une quelconque des revendications précédentes, dans lequel le dispositif de liaison (1A, 1B) fournit une liaison électrique et une liaison fluidique entre le tuyau d'aspiration (2) et l'unité fonctionnelle (3A, 3B).

11. Procédé de fabrication d'un dispositif de liaison (1) selon l'une quelconque des revendications 1 à 9, comprenant les étapes consistant à :
fabriquer (S1) la première section de liaison (6) avec une première tolérance de fabrication, selon laquelle le diamètre extérieur de la première section de liaison (6) se trouve dans une première plage de tolérance (T1),
fabriquer (S2) la seconde section de liaison (7) avec une seconde tolérance de fabrication, selon laquelle le diamètre intérieur de la seconde section de liaison (7) se trouve dans une seconde plage de tolérance (T2), dans lequel
la valeur limite supérieure (OG1) de la première plage de tolérance (T1) est supérieure à la valeur limite inférieure (UG2) de la seconde plage de tolérance (T2).

12. Procédé selon la revendication 11, dans lequel la valeur limite supérieure (OG1) de la première plage de tolérance (T1) est supérieure d'au moins 0,1 mm, en particulier d'au moins 0,15 mm ou d'au moins 0,2 mm à la valeur limite inférieure (UG) de la seconde plage de tolérance (T2).

13. Procédé selon la revendication 11 ou 12, dans lequel la valeur limite inférieure (UG1) de la première plage de tolérance (T1) est inférieure de 0,4 mm maximum, en particulier de 0,3 mm maximum à la valeur limite supérieure (OG2) de la seconde plage de tolérance (T2).
